# NEW EUROPEAN PATENT SPECIFICATION

(11) **EP 1 261 660 B2**
(45) Date of publication and mention of the opposition decision: **21.11.2012**
(45) Mention of the grant of the patent: 22.12.2004
(21) Application number: 01907891.4
(22) Date of filing: 21.02.2001
(51) Int. Cl.: C08J 3/20, C08K 5/00, C08K 5/134, C08K 5/52, C08K 5/34, C08K 5/098, C08L 23/02

(54) **PROCESS FOR ADDITION OF ADDITIVES TO POLYMER PARTICLES**
VERFAHREN ZUM BEISCHLAG VON ADDITIVEN ZU POLYMERTEILCHEN
PROCEDE D'ADDITION D'ADDITIFS A DES PARTICULES POLYMERES

(30) Priority: 21.02.2000 GB 0004043
(43) Date of publication of application: 04.12.2002
(73) Proprietor: Borealis Technology Oy, 06101 Porvoo (FI)
(72) Inventor: FATNES, Anne, Marie, N-3960 Stathelle (NO); OYSAED, Harry, N-3960 Stathelle (NO); FROHAUG, Astrid, N-3960 Stathelle (NO); JAMTVEDT, Svein, N-3960 Stathelle (NO); HOFFMANN, Kurt Ciba Specialty Chemicals Inc., CH-4002 Basel (CH)
(74) Representative: Campbell, Neil Boyd
(86) International application number: PCT/GB2001/000721
(87) International publication number: WO 2001/062833

(56) References cited:
- EP-A- 0 310 393
- EP-A- 0 411 628
- EP-A1- 0 590 647
- WO-A-00/11065
- GB-A- 2 293 827
- US-A- 5 883 165
- ' Stabiizer combinations for improving cycle times in the rotational molding process' RESEARCH DISCLOSURE April 2000, pages 727 - 733

## Description

This invention relates to a process for the preparation of moulded polyolefin polymer products, in particular to the moulding of a particulate polymer material by rotational moulding techniques and to the particulate polymer material. These products may be used in the food industry.

Rotational moulding is a polymer moulding technique which is particularly suitable for the production of large polymer products, especially containers. It is quite different from other conventional moulding techniques such as injection moulding or blow moulding. A mould is charged with polymer powder, closed and placed in an oven where it is rotated so as to distribute the polymer powder over the mould surface. Once the polymer has melted and formed a coating on the mould surface the mould is cooled. Rotational moulding is described for example by Oliveira et al. in J. Materials Sci. 31: 2227-2240 (1996), Bawiskar et al in Polymer Engineering and Science 34: 815-820 (1994) and Bruins, "Basic Principles of Rotational Moulding", Gordon and Breach, NY, 1971.

The polyolefin polymer powder used in rotational moulding, e.g. a polypropylene or more generally a polyethylene, requires the presence of stabilizers, including UV-stabilizers, to prevent degradation between the time the polymer is produced and when it is moulded. Stabilisers are also vital in preventing degradation during the rotomoulding process and in the eventual rotomoulded article. Addition of stabiliser to the polymer particles is normally achieved by mixing polymer and stabilizers in an extruder mixer which applies shear force to mix the components and melt the polymer. The extrudate is then ground to produce a moulding powder of appropriate particle size. Such a procedure however is highly energy-consuming and cross contamination may occur.

An alternative way of producing the stabilized moulding powder might thus have seemed to be to simply blend the stabilizers with an olefin polymer particulate which already has the appropriate particle size for rotational moulding, e.g. by spraying of liquid stabilizers or stabilizer solutions onto the polymer particulate and/or by simply mixing particulate stabilizers into the polymer particulate. This however has until now resulted in unacceptable deposits of the UV-stabilizer on the surface of the mould used in rotational moulding.

It has now been surprisingly found that a particular blend of additives may be employed in melt additivation without unacceptable deposits of the UV-stabilizer on the surface of the mould used in rotational moulding being formed. These blends must be very homogeneous and without wishing to be limited by theory, it is envisaged that the blends described below have greater solubility and compatibility with polymers such as polyethylene thus surprisingly allowing direct rotomoulding of the polymer powder without deposit formation.

Thus, viewed from one aspect the invention provides a process for the preparation of a polymer moulding powder for rotational moulding, said process comprising:
(i) obtaining a plurality of polyolefin polymer particles having a mean particle size of 1 to 2000 µm;
(ii) heating a mixture of:
   A) at least one phenolic antioxidant preferably selected from [Octadecyl 3-(3',5'-di-tert. butyl-4-hydroxyphenyl)propionate] (e.g. Irganox 1076™) or [Pentaerythrityl-tetrakis(3-(3',5'-di-tert. butyl-4-hydroxyphenyl)-propionatel (e.g. Irganox 1010™);
   B) at least one organic phosphite or phosphonite antioxidant preferably selected from [Bis(2-methyl-4,6-bis(1,1-dimethylethyl)phenyl)phosphorous acid ethylester] (e.g. Irgafos 38™), [Tris(2,4-di-*t*-butylphenyl)phosphite] (e.g. Irgafos 168™), tris-nonylphenyl phosphate, [Tetrakis-(2,4-di-*t*-butylphenyl)-4,4'-biphenylen-di-phosphonite] (e.g. Irgafos P-EPQ™) or [Phosphorous acid- cyclic butylethyl propandiol, 2,4,6-tri-*t*-butylphenyl ester] (e.g. Ultranox 641™) ;
   C) at least one UV-stabiliser;
   D) a diluent; and optionally
   E) a metal stearate;
   preferably under an inert atmosphere, to a temperature of between 20 and 200°C;
(iii) depositing the mixture onto said polyolefin polymer particles; and optionally
(iv) blending a metal stearate to the resulting polyolefin polymer particles if component E was not present in said mixture.

Viewed from another aspect the invention provides a polymer moulding powder for rotational moulding obtainable by a process as hereinbefore described.

Viewed from yet another aspect the invention provides a process for the preparation of a moulded polymer item, said process comprising:
(i) obtaining a plurality of polyolefin polymer particles having a mean particle size of 1 to 2000 µm;
(ii) heating a mixture of:
   A) at least one phenolic antioxidant;
   B) at least one organic phosphite or phosphonite antioxidant;
   C) at least one UV-stabiliser selected from [1,6-Hexanediamine, N,N'-bis(2,2,6,6-tetramethyl-4-piperidinyl)-, polymer with 2,4,6-trichloro-1,3,5-triazine, reaction products with, N-butyl-1-butanamine and N-butyl-2,2,6,6-tetramethyl-4-piperidinamine] (e.g. Chimassorb 2020™), [Poly((6-morpholino-s-triazine-2,4-diyl)(2,2,6,6-tetramethyl-4 piperidyl)imino)hexamethylene (2,2,6,6-tetramethyl-4-piperidyl)imino))] (e.g. Cyasorb UV 3346™); and [Poly((6-((1,1,3,3-tetramethylbutyl)amino)-1,3,5-triazine-2,4-diyl)(2,2,6,6-tetramethyl-4-piperidyl)imino)-1,6-hexanediyl((2,2,6,6-tetramethyl-4-piperidyl)imino))] (e.g. Chimassorb 944™);
   D) a diluent; and optionally
   E) a metal stearate;
   to a temperature of between 20 and 200°C;
(iii) depositing the mixture onto said polyolefin polymer particles; optionally
(iv) blending a metal stearate to the resulting polyolefin polymer particles if component E was not present in said mixture;
(v) rotomoulding said particles.

The components A to D and optionally E may be mixed in any convenient vessel but are preferably mixed in a batch or continuous mixer to ensure excellent mixing occurs. Suitable mixing apparatuses include Forberg, Idecon, and Lodige mixers. The mixture of components is preferably in the liquid state at 100°C, e.g. molten or in solution, and is preferably sprayed onto the polymer powder at between 100°C and 200°C. In this process it is preferred that the liquid stabilizer composition comprising components A to D and optionally E be heated to a temperature in the range 90 to 140°C, more preferably 100 to 130°C.

The polymer powder onto which the mixture is deposited, e.g. sprayed should preferably be at a temperature of between 20 to 80°C, e.g. 60°C or 75°C and should preferably be circulating in a mixer as spraying occurs. This ensures even distribution of the liquid stabilising solution over the polymer particles. The spraying may be direct, e.g. through a preheated spray die, or indirect, e.g. by directing a flow of liquid onto a diffuser. The mixture of components A to D and optionally E must be a liquid when spraying occurs.

The inert atmosphere may be provided by an conventional inert gas such as a noble gas or preferably nitrogen.

The moulding powder used according to the invention may be obtained by any convenient method but must have a mean particle size of 1 to 2000 µm. Preferably, the polymer particles has a mean polymer particle size (e.g. as determined using a particle size analyser such as a Malvern analyser) of 50 to 1000 µm, especially 100 to 500 µm. The particle size distribution is preferably such that:
D(v, 0.5) is between 100 and 500 µm
D(v, 0.1) is between 50 and 300 µm
D(v, 0.9) is between 300 and 1000 µm
most preferably D(v, 0.5) being between
200 and 400 µm, D(v, 0.1) being between
100 and 200 µm, and D(v, 0.9) being between
400 and 600 µm.

(D(v, 0.5) means the particle diameter below which 50% by volume of the particles fall; similarly D(v, 0.1) is the particle diameter below which 10% by volume of the particles fall). This choice of particle size and uniformity ensures uniformity in the resulting rotationally moulded product.

Polymer particles of a suitable size may be obtained by methods such as grinding, extruding and pelletising or simply synthesising polymer particles having a suitable particle size directly.

For different polyolefin polymers, the optimum particle sizes will differ slightly. However, by way of example for polyethylenes with MFR₂ 1 to 40 and densities 920 to 950 kg/m³, the optimum particle size will generally be 100 to 600 µm. Where the particle size is too large, the melting characteristics in rotational moulding will be poor leading to mechanically substandard moulded products. On the other hand, where the particle size is too small the powder will have poor flow characteristics and will not distribute evenly in the mould.

The polymers used will preferably have a narrow molecular weight distribution Mw/Mn to ensure a relatively sharp melting point and hence even distribution in the mould. Mw/Mn values preferably lie in the range 2 to 10, more especially 2 to 5. Preferably the polymers should have a melting point of 100 to 180°C, more preferably 120 to 130°C, with a melting range of less than 20°C.

The polyolefin polymer particulate preferably has a very homogeneous molecular structure, seen as a narrow melting range in the curve obtained by differential scanning calorimetry and as a very even crystal structure in micrographic studies. This ensures that the powder melts evenly and that the homogeneity of the moulded product is high.

To ensure that the moulds used in rotational moulding may be loaded with sufficient polymer to produce moulded items with adequate wall thicknesses, it is also desirable that the moulding powder should have a bulk density of at least 300 kg/m³ more preferably at least 330 kg/m³, e.g. 330 to 500 kg/m³, more particularly 450 to 490 kg/m³.

The polymer density is conveniently in the range 800 to 1000 kg/m³, particularly 850 to 950 kg/m³. For polyethylene, the density is preferably 920 to 950 kg/m³, more preferably 930 to 940 kg/m³. For polypropylenes, the density is preferably 880 to 950 kg/m³, more preferably 890 to 910 kg/m³.

The polymer preferably has a melt flow rate MFR₂ of 1 to 30 g/10 min., more preferably 2 to 20 g/10 min. For polyethylenes, the MFR₂ is preferably 2 to 10 g/10 min., more preferably 5 to 7.5 g/10 min. For polypropylenes, the MFR₂ is preferably 10 to 20 g/10 min., more preferably 12 to 18 g/10 min.

The polymer moulding powder preferably has a dry flow of 10 to 40 s/100g, more preferably 15 to 30 s/100g.

The polymers used according to the invention are preferably homopolymers or copolymers of α-olefins, in particular polymers deriving from a C₂₋₄ α-olefin, particularly propylene and more particular ethylene, optionally together with one or more comonomers, e.g. selected from mono or dienes such as C₂₋₁₄ mono or dienes, particularly C₂₋₈ α-olefins. Preferably at least 50% by weight of the polymer structure derives from a C₂₋₄ α-olefin.

Such polymers may be prepared by conventional olefin polymerization techniques, e.g. using Ziegler Natta or metallocene catalysts or chromium catalysts and polymerization processes such as gas phase, slurry, and solution process, especially slurry processes. Typically gas phase, loop and tank reactors may be used. However it has been found that polyolefin polymer particles of appropriate size for preparation of the moulding powder may readily be prepared using supported catalysts, in particular catalysts comprising porous particulates loaded with the catalyst, e.g. the reaction product of a metallocene and an aluminoxane.

Such supported catalysts may be prepared for example by forming a slurry of particulate support, metallocene, aluminoxane and solvent, draining off excess solvent, rinsing of excess metallocene/aluminoxane and drying. Such catalyst support preparation techniques are known in the art.

The catalyst support material used to carry an olefin polymerization catalyst is conveniently an inorganic or organic material, e.g. an inorganic oxide such as silica, alumina or zirconia or an inorganic halide such as magnesium chloride, or a polymer such as an acrylate or methacrylate. Preferably the support material, if inorganic, is subjected to a heat treatment (calcination) before catalyst impregnation, e.g. by a period of heat treatment in a dry, non-reducing (e.g. oxygen containing) atmosphere such as air at a temperature of at least 200°C, preferably at least 400°C and especially preferably at least 600°C, for a period of 0.5 to 50 hours, e.g. 2 to 30 hours, preferably 10 to 20 hours. The support material before calcination conveniently has a surface area of 20 to 500 mL/g (BET method), a porosity of 0.2 to 3.5 mL/g and a mean particle size of 10 to 200µm.

The catalyst with which the support material is impregnated may be any polymerization catalyst although preferably it will be a Ziegler Natta catalyst (i.e. the combination of a transition metal (e.g. Ti, V or Cr) compound and an aluminium compound), a pyrazolyl catalyst (e.g. as described in WO97/17379, US-A-4808680, EP-A-482934, US-A-5312394 or EP-A-617052) or a metallocene catalyst.

Examples of suitable catalysts are known from: EP-A-206794, EP-A-22595, EP-A-420436, EP-A-347128, EP-A-551277, EP-A-648230, WO 94/03506, WO 96/28479, US-A-5057475, EP-A-672688, EP-A-368644, EP-A-491842, EP-A-614468, EP-A-705281, WO 93/19103, WO 95/07939, WO 97/29134, WO 98/02470, WO 95/12622, US-A-5086135, US-A-5455214, WO 97/32707, EP-A-519237, EP-A-518092, EP-A-444474, EP-A-416815, EP-A-62979, EP-A-284708, EP-A-354893, EP-A-567952 and EP-A-661300.

― For metallocene-based catalysts, the catalytically effective metal is preferably a transition metal or a lanthanide, especially a group 4, 5 or 6 metal, e.g. Ti, Zr or Hf. Such metallocenes include a η-bonding ligand, e.g. an optionally substituted optionally fused homo or heterocyclic cyclopentadienyl ligand, preferably with 1, 2 or 3 η-bonding groups coordinating the metal (the term metallocene is often used to denote complexes in which a metal is coordinated by η-bonding groups - here, however, it is used in its broader sense to cover complexes in which the metal is coordinated by one or more η-bonding groups, i.e. groups which use their π-orbitals to complex the metal). Examples of such η-bonding ligands include cyclopentadienyl, indenyl, tetrahydroindenyl, fluorenyl and octahydrofluorenyl ligands and bridged dimers where such η-ligands are attached, e.g. via a 1, 2, 3 or 4 atom chain (e.g. containing C, N, O, S, Si or P chain atoms - for example an ethylene or Si(CH₃)₂ group), to a further such η-ligand.

Thus by way of example the metallocene catalyst may be of formula I

(CpR'ₖ)ₘ MRₙ X_{q} (I)

where Cp is a fused or non fused homo or heterocyclic cyclopentadienyl η-ligand;
R' is a hydrocarbyl, hydrocarbyloxy, hydrocarbylsilyloxy or hydrocarbylgermyloxy group containing 1 to 20 carbon atoms or one R' is a bridging group to a further fused or non fused homo or heterocyclic cyclopentadienyl η-ligand, the bridging group preferably providing a 1, 2, 3 or 4 atom chain between the cyclic groups, for example with C, N, O, S, P or Si chain atoms, especially C and/or Si, e.g. an ethylene group;
k is zero or an integer having a value of 1, 2, 3, 4 or 5;
M is a group 4, 5 or 6 metal;
X is a halogen atom;
R is hydrogen or a hydrocarbyl or hydrocarbyloxy group containing 1 to 20 carbon atoms;
m is the integer 1, 2 or 3;
n and q are zero or integers 1, 2 or 3; and
the sum of m, n and q corresponds to the degree of coordination possible for M in the oxidation state in which it exists.

Preferably the metallocene contains at least one Cp group other than unsubstituted cyclopentadienyl, i.e. preferably the metallocene is a "substituted metallocene".

Particularly preferably the metallocene is a bridged bis-indenyl metallocene.

Many metallocene catalysts are known, e.g. as described in the patent publications mentioned above and the patent publications of Exxon, Mobil, BASF, DOW, Fina, Hoechst and Borealis, e.g. EP-A-206749, etc.

Typical examples of suitable metallocenes include the following:
cyclopentadienyl, indenyl, fluorenyl, pentamethyl-cyclobutadienyl, methyl-cyclopentadienyl, 1,3-di-methyl-cyclopentadienyl, i-propyl-cyclopentadienyl, 1,3-di-i-propyl-cyclopentadienyl, n-butyl-cyclopentadienyl, 1,3-di-n-butyl-cyclopentadienyl, t-butyl-cyclopentadienyl, 1,3-di-t-butyl-cyclopentadienyl, trimethylsilyl-cyclopentadienyl, 1,3-di-trimethylsilyl-cyclopentadienyl, benzyl-cyclopentadienyl, 1,3-di-benzyl-cyclopentadienyl, phenyl-cyclopentadienyl, 1,3-di-phenyl-cyclopentadienyl, naphthyl-cyclopentadienyl, 1,3-di-naphthyl-cyclopentadienyl, 1-methyl-indenyl, 1,3,4-tri-methyl-cyclopentadienyl, 1-i-propyl-indenyl, 1,3,4-tri-i-propyl-cyclopentadienyl, 1-n-butyl-indenyl, 1,3,4-tri-n-butyl-cyclopentadienyl, 1-t-butyl-indenyl, 1,3,4-tri-t-butyl-cyclopentadienyl, 1-trimethylsilyl-indenyl, 1,3,4-tri-trimethylsilyl-cyclopentadienyl, 1-benzyl-indenyl, 1,3,4-tri-benzyl-cyclopentadienyl, 1-phenyl-indenyl, 1,3,4-tri-phenyl-cyclopentadienyl, 1-naphthyl-indenyl, 1,3,4-tri-naphthyl-cyclopentadienyl, 1,4-di-methyl-indenyl, 1,4-di-i-propyl-indenyl, 1,4-di-n-butyl-indenyl, 1,4-di-t-butyl-indenyl, 1,4-di-trimethylsilyl-indenyl, 1,4-di-benzyl-indenyl, 1,4-di-phenyl-indenyl, 1,4-di-naphthyl-indenyl, methyl-fluorenyl, i-propyl-fluorenyl, n-butyl-fluorenyl, t-butyl-fluorenyl, trimethylsilyl-fluorenyl, benzyl-fluorenyl, phenyl-fluorenyl, naphthyl-fluorenyl, 5,8-di-methyl-fluorenyl, 5,8-di-i-propyl-fluorenyl, 5,8-di-n-butyl-fluorenyl, 5,8-di-t-butyl-fluorenyl, 5,8-di-trimethylsilyl-fluorenyl, 5,8-di-benzyl-fluorenyl, 5,8-di-phenyl-fluorenyl and 5,8-di-naphthyl-fluorenyl.

The catalysts may require the use of a co-catalyst or catalyst activator. Preferred as co-catalysts are boron compounds and more preferably aluminoxanes, in particular the C₁₋₁₀ alkyl aluminoxanes and most particularly methyl aluminoxane (MAO).

Such aluminoxanes may be used as the sole co-catalyst or alternatively may be used together with other co-catalysts. Thus besides or in addition to aluminoxanes, other cation complex forming catalyst activators may be used. In this regard mention may be made of the silver and boron compounds known in the art. What is required of such activators is that they should react with the metallocene or pyrazolyl complex to yield an organometallic cation and a non-coordinating anion (see for example the discussion on non-coordinating anions J⁻ in EP-A-617052 (Asahi)).

Aluminoxane co-catalysts are described by Hoechst in WO94/28034. These are linear or cyclic oligomers having up to 40, preferably 3 to 20, -[Al(R")O]- repeat units (where R" is hydrogen, C₁₋₁₀ alkyl (preferably methyl) or C₆₋₁₈ aryl or mixtures thereof).

Where a co-catalyst is used, it may be used separately but more preferably it is also loaded onto the porous support material. In this event it is preferred to allow the catalyst and the co-catalyst to react in a liquid phase and to load the reaction product onto the support.

Particularly preferred polymer particles can be prepared if the procedure described in WO00/22011 is followed. Thus, if a mechanically fluidised porous particulate support is impregnated with a suitable catalyst and a cocatalyst and the monomer(s) are polymerised, ideal polymer particles for rotomoulding are obtained.

The UV-stabilizer or mixture of stabilisers used in the present invention should be compatible with the polymer, should have a relatively low melting point and/or good compatibility with the additive blend. Thus UV stabilisers which are soluble or partially soluble in the polymer (e.g. polyethylene) are preferred. It is also preferred if the UV-stabilisers are approved for use in polyolefins in contact with food. Preferred UV stabilisers are high molecular weight hindered amine light stabilisers, e.g. those having a molecular weight of 1500 to 4000, preferably 2000 to 3000.

The UV stabilisers are [1,6-Hexanediamine, N, N'-bis(2,2,6,6-tetramethyl-4-piperidinyl)-, polymer with 2,4,6-trichloro-1,3,5-triazine, reaction products with, N-butyl-1-butanamine and N-butyl-2,2,6,6-tetramethyl-4-piperidinamine] (e.g. Chimassorb 2020), Poly((6-morpholino-s-triazine-2,4-diyl)(2,2,6,6-tetramethyl-4 piperidyl)imino)hexamethylene (2,2,6,6-tetramethyl-4-piperidyl)imino))] (e.g. Cyasorb UV 3346) or Poly((6-((1,1,3,3-tetramethylbutyl)amino)-1,3,5-triazine-2,4-diyl)(2,2,6,6-tetramethyl-4-piperidyl)imino)-1,6-hexanediyl((2,2,6,6-tetramethyl-4-piperidyl)imino))] (e.g. Chimassorb 944).

Especially preferably the UV stabiliser is [1,6-Hexanediamine, N, N'-bis(2,2,6,6-tetramethyl-4-piperidinyl)-, polymer with 2,4,6-trichloro-1,3,5-triazine, reaction products with, N-butyl-1-butanamine and N-butyl-2,2,6,6-tetramethyl-4-piperidinamine]. The structures of most of these stabilisers are illustrated in the scheme below.

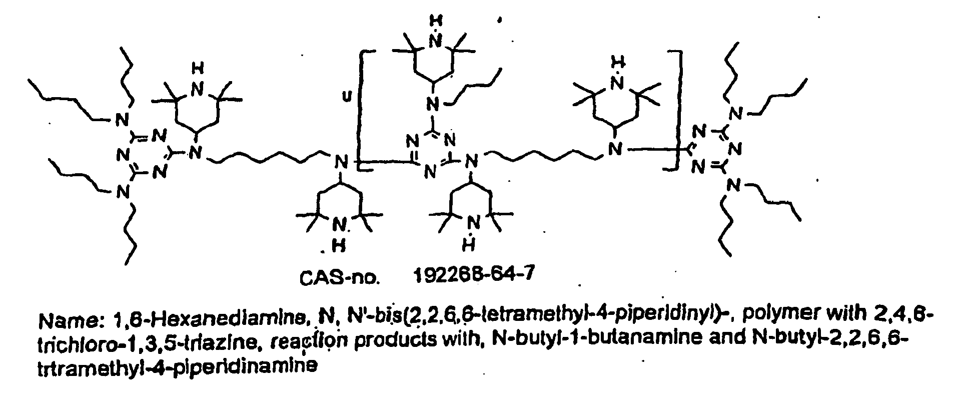

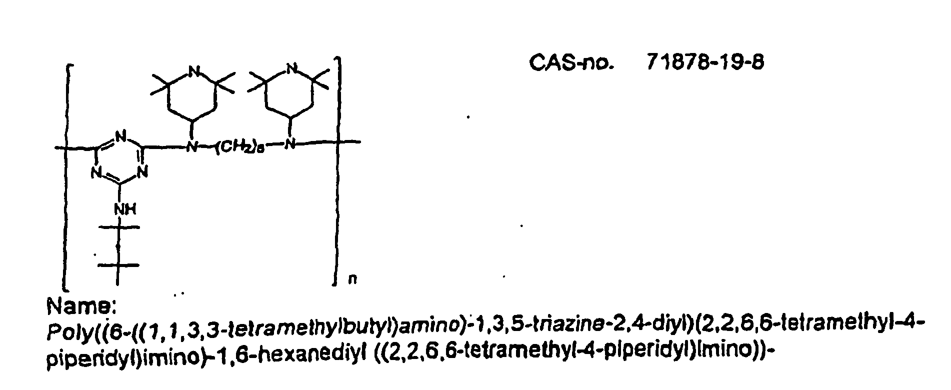

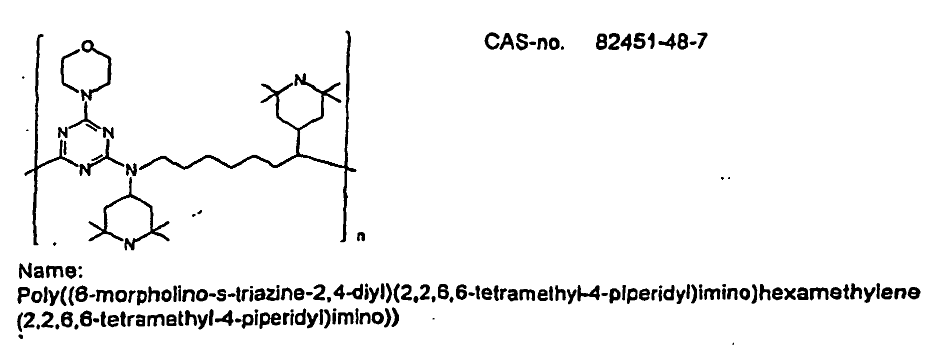

Chimassorb 2020 and Chimassorb 944 are available from Ciba Specialty Chemicals. Cyasorb 3346 is available from Cytec or from Everlight (Taiwan) where it is sold under the trade name Eversorb 92.

Besides the UV-stabilizer, the polymer moulding powder used according to the invention has materials capable of inhibiting degradation of the polyolefin polymer, i.e. antioxidants and antacids.

The phenolic antioxidant should be approved for use in polyolefins in contact with food and is preferably [Octadecyl 3-(3',5'-di-tert. butyl-4-hydroxyphenyl)propionate] (e.g.Irganox 1076) or [Pentaerythrityl-tetrakis(3-(3',5'-di-tert. butyl-4-hydroxyphenyl)-propionate] (e.g. Irganox 1010). It is also possible to employ a mixture of these compounds. Irganox 1010 and Irganox 1076 are available from Ciba Specialty Chemicals. Great Lakes Chemicals also sells these compounds where they are sold under the trade names Alkanox 20 and Alkanox 240 respectively. The phenolic antioxidant is most preferably [Octadecyl 3-(3',5'-di-tert. butyl-4-hydroxyphenyl)propionate]. The structures of these compounds are illustrated below.

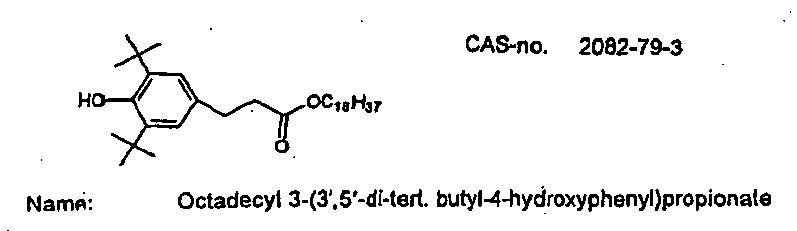

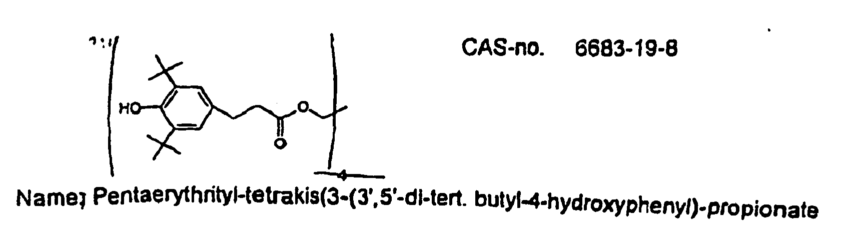

The organic phosphite or phosphonite antioxidant should be approved for use in polyolefins in contact with food and may be [Bis(2-methyl-4,6-bis(1,1-dimethylethyl)phenyl) phosphorous acid ethylester] (e.g. Irgafos 38), tris-nonylphenyl phosphite, [Tris (2,4-di-*t*-butylphenyl) phosphite] (e.g. Irgafos 168), [Tetrakis-(2,4-di-*t*-butylphenyl)-4,4'-biphenylen-di-phosphonite] (e.g. Irgafos P-EPQ) or [Phosphorous acid, cyclic butylethyl propandiol, 2,4,6-tri-*t*-butylphenyl ester] (e.g. Ultranox 641). The Irgafos range are available from Ciba Specialty Chemicals and Ultranox 641 is available from GE Specialty Chemicals. Tetrakis-(2,4-di-*t*-butylphenyl)-4,4'-biphenylen-di-phosphonite is also sold under the trade names Alkanox 24-44 by Great Lakes Chemicals and Sandostab P-EPQ by Clariant. Irgafos 38, Irgafos P-EPQ and Ultranox 641 are preferred. Especially preferred is the organic phosphite antioxidant is Bis(2-methyl-4,6-bis(1,1-dimethylethyl)phenyl)phosphorous acid ethylester. Structures of these compounds are illustrated below.

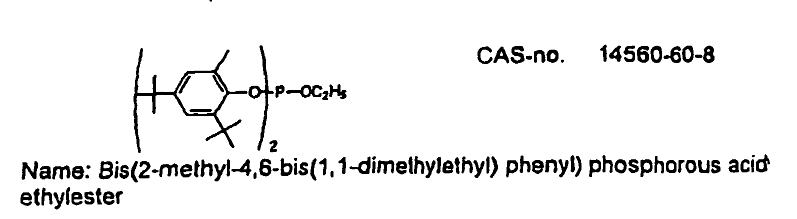

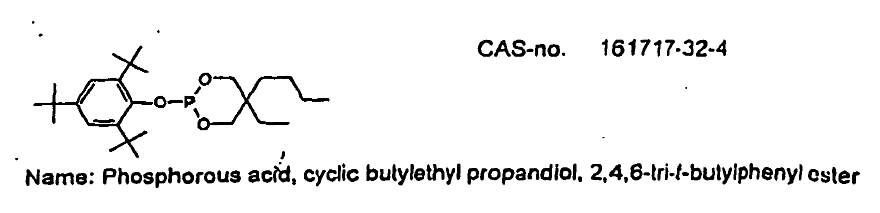

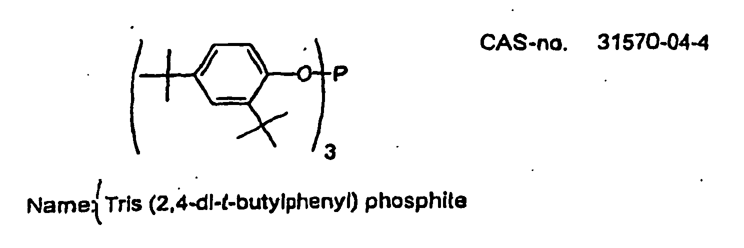

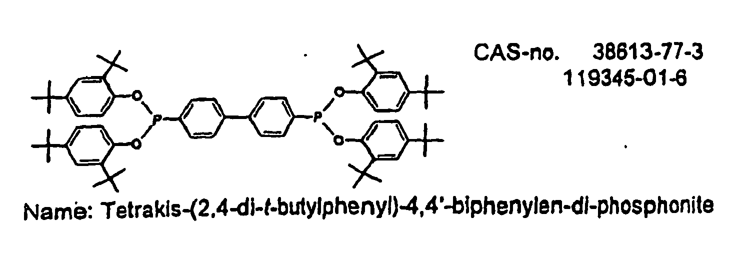

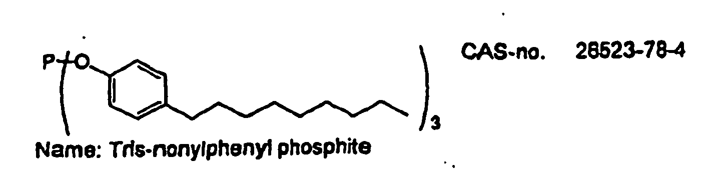

Examples of antacids include metal stearates, most preferably Zn-stearate or Ca-stearate. The stearate may be blended to the coated polymer particles as a fine powder or may be deposited onto the polymer powder as part of the additive mixture.

Suitable diluents are mineral oil, silicon oil, waxes e.g. polyethylene wax, epoxidised soybean oil, antistatic agents, glyceryl monocarboxylic ester, and N,N-bis(2-hydroxyethyl) dodecanamide. Especially preferably the diluent is mineral oil or N,N-bis(2-hydroxyethyl) dodecanamide. N,N-bis(2-hydroxyethyl) dodecanamide is.believed to act not only as a diluent but also as an antistatic agent which may be beneficial for rotomoulding and in rotomoulded articles. The use of N,N-bis(2-hydroxyethyl) dodecanamide may also improve surface finish.

The polymer moulding powder should preferably comprise 0.01 to 0.2 wt%, e.g. 0.1 to 0.2 wt% organic phosphite or phosphonite antioxidant, 0.01 to 0.5 wt%, e.g. 0.1 to 0.3 wt% phenolic antioxidant, 0.01 to 2 wt%, e.g. 0.1 to 1 wt% UV stabiliser, 0.01 to 0.5 wt%, e.g. 0.1 to 0.3 wt% metal stearate and 0.02 to 3 wt%, e.g. 0.1 to 1 wt% diluent.

Besides the stabilizer(s), the moulding powder may contain with other additives, e.g. lubricants, antifogging agents, antistatic agents, clarifiers, nucleating agents, blowing agents, plasticizers, flame retardants, etc. Where the rotomoulded items made using the moulded polymer powder are for use in the food industry preferably all the ingredients in the rotomoulding powder will be of a grade approved for food contact purposes.

Rotational moulding using the moulding powder of the invention may be effected conventionally, e.g. using commercially available rotomoulding apparatus. The oven temperature and oven curing time may be selected according to the melting characteristics of the polymer and the thickness of the item being produced.

The polymer moulding powder of the invention may be employed as the sole polymer rotomoulding component or may be combined with other polymers.

The invention is illustrated further by the following non-limiting Examples.

### EXAMPLE 1

Polyethylene powder (bulk density 460 to 480 kg/m³, MFR₂ 5.9 to 6.8 g/10 min., and particle size distribution: 600 µm max. 0%, 500 µm max 5%, 425 µm max 5-30%, 300 µm max 20-40%, 212 µm max 15-35%, 150 µm max 8-20%, < 150 µm max 10%) is obtained by metallocene catalysed polymerization of ethylene with hex-1-ene as comonomer.

### EXAMPLE 2

| | |
|---|---|
| PE powder from Example 1 | ≈10kg (to 100 wt%) |
| Irganox 1076 | 6g |
| Irgafos 38 | 12g |
| Chimassorb 2020 | 17g |
| Ondina 941™ white mineral oil | 38g |
| Zinc Stearate | 18g |

Irganox 1076 (6 g), Irgafos 38 (12 g), Chimassorb 2020 (17 g) together with Ondina 941 mineral oil (38 g available from the Shell Oil Company) were heated to 100-130°C under a nitrogen atmosphere. In a mechanically fluidised bed mixer, e.g. a Forberg mixer, the hot additives were sprayed onto a circulating polyethylene powder prepared as described in Example 1, the powder having a temperature of 60°C. Zinc Stearate powder was added and the mixture blended for another five minutes.

### EXAMPLE 3

### Rotational moulding

The moulding powder of Example 2 was moulded using a Rotospeed E-60 Express rotomoulding machine. There was no deposit of UV-stabilizer on the mould (visual inspection of the mould and FT-IR analysis) and the moulded products had satisfactory impact strength and UV stability.

The rotomoulding machine was a shuttle machine with one cranked arm provided with a 44 kW propane gas burner, a 10000 CFM (283 m³/min) circulating fan, a 750 CFM (21 m³/min) exhaust fan, and two 3350 CFM (95 m³/min) forced air cooling fans. The oven temperature used was 280°C with an oven time of 14 minutes and a cooling time of 16 minutes.

The mould used was an aluminium box mould of approximately 7.4 litre volume. The rotation ratio was 9:1.4 and the rotational rates were 9/mm and 1.4/min. The moulding powder load was 700 g giving a wall thickness of approximately 4 mm.

No deposits could be discovered in the mould even after 10 successive mouldings.

Rotomoulded items prepared as in Example 3 were compared to a conventional rotomoulding powder (RM8343 from Borealis). Melt flow rate and impact properties were comparable.

Additivated polymer powder was stored at 23°C and 50% humidity and 50°C and 95% humidity respectively for 150 days. Additive analysis showed that the hydrolytic stability was good (no reaction, no hydrolysis of additives). Melt flow rate of the powder did not change.

### Example 4

| | |
|---|---|
| PE powder from Example 1 | 10kg (to 100 wt%) |
| Irganox 1076 | 6g |
| Irgafos 38 | 12g |
| Chimassorb 2020 | 17g |
| Ondina 941 white mineral oil | 38g |
| Zinc Stearate | 18g |

Irganox 1076 (6 g), Irgafos 38 (12 g), Chimassorb 2020 (17 g), Zn-stearate (18 g) together with Ondina 941 mineral oil (38 g available from the Shell Oil Company) were heated to 120-140°C under a nitrogen atmosphere. In a mechanically fluidised bed mixer, e.g. a Forberg mixer, the hot additives were sprayed onto a circulating polyethylene powder prepared as described in Example 1, the powder having a temperature of 60°C. The mixture was blended for another five minutes.

### Example 5

Influence of UV stabiliser on properties of rotomoulded article.

| | |
|---|---|
| PE powder from Example 1 | 10 kg (to 100 wt%) |
| Irganox 1076 | 6 g - (600 ppm) |
| Irgafos 38 | 12 g - (1200 ppm) |
| UV stabiliser | 20 g - (2000 ppm) |
| Ondina 941 white mineral oil | 47 g - (4700 ppm) |

Irganox 1076, Irgafos 38, UV stabiliser, Zn-stearate together with Ondina 941 mineral oil were heated to 120-140°C under a nitrogen atmosphere. In a mechanically fluidised bed mixer, e.g. a Forberg mixer, the hot additives were sprayed onto a circulating polyethylene powder prepared as described in Example 1, the powder having a temperature of 60°C. Zinc stearate powder (9 g) was added and the mixture blended for another five minutes. The mixture was blended for another five minutes. Rotomoulding was effected as described in Example 3.

The yellowness index of the resulting articles was measured. Percentage retained mechanical properties after 3000 hours in wheather-o-meter C165 were measured accroding to ISO 4892.

| UV stabiliser | YI₀ | Elongation to break, ISO 527-5A |
|---|---|---|
| Chimassorb 2020 | -6.5 | 65% retained mechanical properties after 3000 hours in WOM |
| Cyasorb 3364 | -6.8 | 70% retained mechanical properties after 3000 hours in WOM |

### Example 6

Influence of phosphites/phosphonites on properties of rotationally moulded article.

| | |
|---|---|
| PE powder from Example 1 | 10 kg (to 100 wt%) |
| Irganox 1076 | 6 g - (600 ppm) |
| Phosphite | 12 g - (1200 ppm) |
| Chimassorb 2020 | 20 g - (2000 ppm) |
| Ondina 941 white mineral oil | 47 g - (4700 ppm) |
| Zinc Stearate | 9 g - (900 ppm) |

Rotomoulded articles were prepared following the experimental procedure described in Example 5.

The yellowness index of the resulting articles was measured.

| Phosphite | YI₀ |
|---|---|
| Irgafos 38 | -6.5 |
| Irgafos P-EPQ | -7.7 |
| Ultranox 641 | -7.8 |

The YI values for the rotomoulded articles made in Examples 5 and 6 are lower than those associated with conventional rotomoulded articles. The mechanical property values determined are comparable with conventional rotomoulded articles showing that the process of the invention does not detrimentally affect mechanical properties.

### EXAMPLE 7

| | |
|---|---|
| PE powder from Example 1 | ≈10kg (to 100 wt%) |
| Irganox 1076 | 6g |
| Irgafos 38 | 12g |
| Chimassorb 2020 | 17g |
| Dimodan PVP™ | 47g |
| Zinc Stearate | 9g |

Irganox 1076 (6 g), Irgafos 38 (12 g), Chimassorb 2020 (17 g) together with Dimodan (47 g available from the Danisco Cultor) were heated to 100-130°C under a nitrogen atmosphere. In a mechanically fluidised bed mixer, e.g. a Forberg mixer, the hot additives were sprayed onto a circulating polyethylene powder prepared as described in Example 1, the powder having a temperature of 60°C. Zinc Stearate powder was added and the mixture blended for another five minutes.

### EXAMPLE 8

| | |
|---|---|
| PE powder from Example 1 | ≈10kg (to 100 wt%) |
| Irganox 1076 | 6g |
| Irgafos 38 | 12g |
| Chimassorb 2020 | 17g |
| Armostat 2000™ | 47g |
| Zinc Stearate | 9g |

Irganox 1076 (6 g), Irgafos 38 (12 g), Chimassorb 2020 (17 g) together with Armostat (47 g available from Akzo Nobel) were heated to 90°C under a nitrogen atmosphere. In a mechanically fluidised bed mixer, e.g. a Forberg mixer, the hot additives were sprayed onto a circulating polyethylene powder prepared as described in Example 1, the powder having a temperature of 60°C. Zinc Stearate powder was added and the mixture blended for another five minutes.

## Claims

1. A process for the preparation of a polymer moulding powder for rotational moulding, said process comprising:
(i) obtaining a plurality of polyolefin polymer particles having a mean particle size of 1 to 2000 µm;
(ii) heating a mixture of:
A) at least one phenolic antioxidant;
B) at least one organic phosphite or phosphonite antioxidant;
C) at least one UV-stabiliser selected from [1,6-Hexanediamine, N,N'-bis(2,2,6,6-tetramethyl-4-piperidinyl)-, polymer with 2,4,6-trichloro-1,3,5-triazine, reaction products with, N-butyl-1-butanamine and N-butyl-2,2,6,6-tetramethyl-4-piperidinamine];
[Poly((6-morpholino-s-triazine-2,4-diyl)(2,2,6,6-tetramethyl-4 piperidyl)imino)hexamethylene (2,2,6,6-tetramethyl-4-piperidyl)imino))]; or
[Poly((6-((1,1,3,3-tetramethylbutyl)amino)-1,3,5-triazine-2,4-diyl) (2,2,6,6-tetramethyl-4-piperidyl)imino)-1,6-hexanediyl((2,2,6,6-tetramethyl-4-piperidyl)imino))];
D) a diluent; and optionally
E) a metal stearate;
to a temperature of between 20 and 200°C;
(iii) depositing the mixture onto said polyolefin polymer particles; and optionally
(iv) blending a metal stearate to the resulting polyolefin polymer particles if component E was not present in said mixture.

2. A process as claimed in claim 1 wherein said at least one phenolic antioxidant is selected from [Octadecyl 3-(3',5'-di-tert. butyl-4-hydroxyphenyl)propionate] or [Pentaerythrityltetrakis(3-(3',5'-di-tert. butyl-4-hydroxyphenyl)-propionate].

3. A process as claimed in claim 1 or 2 wherein said at least one organic phosphite or phosphonite antioxidant is selected from [Bis(2-methyl-4,6-bis(1,1-dimethylethyl)phenyl)phosphorous acid ethylester], [Tris(2,4-di-*t*-butylphenyl)phosphite], tris-nonylphenyl phosphate, [Tetrakis-(2,4-di-*t*-butylphenyl)-4,4'-biphenylen-di-phosphonite] or [Phosphorous acid- cyclic butylethyl propandiol, 2,4,6-tri-*t*-butylphenyl ester].

4. A process as claimed in any one of claims 1 to 3 wherein said polyolefin polymers particles are polyethylene or polypropylene homo or copolymer particles.

5. A process as claimed in any one of claims 1 to 4 wherein said UV stabiliser is [1,6-Hexanediamine, N,N'-bis(2,2,6,6-tetramethyl-4-piperidinyl)-, polymer with 2,4,6-trichloro-1,3,5-triazine, reaction products with, N-butyl-1-butanamine and N-butyl-2,2,6,6-tetramethyl-4-piperidinamine].

6. A process as claimed in any one of claims 1 to 5 wherein said phenolic antioxidant is [Octadecyl 3-(3',5'-di-tert. butyl-4-hydroxyphenyl)propionate].

7. A process as claimed in any one of claims 1 to 6 wherein said at least one organic phosphite or phosphonite antioxidant is [Bis(2-methyl-4,6-bis(1,1-dimethylethyl)phenyl)phosphorous acid ethylester].

8. A process as claimed in any one of claims 1 to 7 wherein said metal stearate is zinc stearate.

9. A process as claimed in any one of claims 1 to 8 wherein said diluent is selected from mineral oil, silicon oil, waxes, epoxidised soybean oil, antistatic agents, glyceryl monocarboxylic ester, and N,N-bis(2-hydroxyethyl) dodecanamide.

10. A process as claimed in any one of claims 1 to 9 wherein said mixture comprises 0.01 to 0.2 wt% organic phosphite or phosphonite antioxidant, 0.01 to 0.5 wt%, phenolic antioxidant, 0.01 to 2 wt% UV stabiliser, 0.01 to 0.5 wt%, metal stearate and 0.02 to 3 wt%, diluent.

11. A process as claimed in any one of claims 1 to 10 wherein all the components of said mixture are approved for contact with food.

12. A process as claimed in any one of claims 1 to 11 wherein said polyolefin polymer particles have a mean particle size of 100 to 500 µm.

13. A process as claimed in any one of claims 1 to 12 wherein said polyolefin polymer particles have a bulk density of 300 to 500 kg/m³.

14. A polymer moulding powder for rotational moulding obtainable by a process as claimed in any one of claims 1 to 13.

15. A process for the preparation of a moulded polymer item, said process comprising:
(i) obtaining a plurality of polyolefin polymer particles having a mean particle size of 1 to 2000 µm;
(ii) heating a mixture of:
A) at least one phenolic antioxidant;
B) at least one organic phosphite or phosphonite antioxidant;
C) at least one UV-stabiliser selected from [1,6-Hexanediamine, N,N'-bis(2,2,6,6-tetramethyl-4-piperidinyl)-, polymer with 2,4,6-trichloro-1,3,5-triazine, reaction products with, N-butyl-1-butanamine and N-butyl-2,2,6,6-tetramethyl-4-piperidinamine];
[Poly((6-morpholino-s-triazine-2,4-diyl) (2,2,6,6-tetramethyl-4 piperidyl)imino)hexamethylene (2,2,6,6-tetramethyl-4-piperidyl)imino))]; or
[Poly((6-((1,1,3,3-tetramethylbutyl)amino)-1,3,5-triazine-2,4-diyl) (2,2,6,6-tetramethyl-4-piperidyl)imino)-1,6-hexanediyl((2,2,6,6-tetramethyl-4-piperidyl)imino))];
D) a diluent; and optionally
E) a metal stearate;
to a temperature of between 20 and 200°C;
(iii) depositing the mixture onto said polyolefin polymer particles; optionally
(iv) blending a metal stearate to the resulting polyolefin polymer particles if component E was not present in said mixture; and
(v) rotomoulding said particles.

## Patentansprüche

1. Verfahren zur Herstellung eines Polymerpreßpulvers für das Rotationsformen, wobei das Verfahren umfaßt:
(i) Gewinnen einer Vielzahl von Polyolefinpolymerpartikeln mit einer mittleren Partikelgröße von 1 bis 2000 µm;
(ii) Erwärmen eines Gemischs von:
A) zumindest einem phenolischen Antioxidans;
B) zumindest einem Antioxidans aus einem organischen Phosphit oder Phosphonit ;
C) zumindest einem UV-Stabilisator, ausgewählt aus [1,6-Hexandiamin, N,N'-Bis(2,2,6,6-tetramethyl-4-piperidinyl)-, Polymer mit 2,4,6-Trichlor-1,3,5-triazin, Reaktionsprodukten mit N-Butyl-1-butanamin und N-Butyl-2,2,6,6-tetramethyl-4-piperidinamin],
[Poly((6-morpholino-s-triazin-2,4-diyl)(2,2,6,6-tetramethyl-4-piperidyl)imiao)hexamethylen(2,2,6,6-tetramethyl-4-piperidyl)imino))]; oder
[Poly((6-((1,1,3,3-tetramethylbutyl)amino)-1,3,5-triazin-2,4-diyl)(2,2,6,6-tetramethyl-4-piperidyl)imino)-1,6-hexandiyl((2,2,6,6-tetramethyl-4-piperidyl)imino))];
D) einem Verdünnungsmittel; und gegebenenfalls
E) einem Metallstearat;
auf eine Temperatur zwischen 20 und 200°C;
(iii) Aufbringen des Gemischs auf die Polyolefinpolymerpartikel; und gegebenenfalls
(iv) Mischen eines Metallstearats mit den entstandenen Polyolefinpolymerpartikeln, falls die Komponente E in diesem Gemisch nicht vorhanden war.

2. Verfahren nach Anspruch 1, wobei das zumindest eine phenolische Antioxidans ausgewählt ist aus [Ocfadecyl-3-(3',5'-di-tert.-butyl-4-hydroxyphenyl)propionat] oder [Pentaerythrityl-tetrakis(3-(3',5'-di-tert.-butyl-4-hydroxyphenyl)-propionat].

3. Verfahren nach Anspruch 1 oder 2, wobei das zumindest eine Antioxidans aus einem organischen Phosphit oder Phosphonit ausgewählt ist aus [Bis(2-methyl-4,6-bis(1,1-dimethylethyl)phenyl)phosphorsäureethylester], [Tris(2,4-di-t-butylphenyl)phosphit], Trisnonylphenylphosphat, [Tetrakis-(2,4-di-t-butylphenyl)-4,4'-biphenylendiphosphonit] oder [Phosphorsäure-cyclischem butylethylpropandiol, 2,4,6-Tri-t-butylphenylester].

4. Verfahren nach einem der Ansprüche 1 bis 3, wobei die Polyolefinpolymerpartikel Partikel aus einem Polyethylen- oder Polypropylenhomo- oder -copolymer sind.

5. Verfahren nach einem der Ansprüche 1 bis 4, wobei der UV-Stabilisator [1,6-Hexandiamin, N,N'-Bis(2,2,6,6-tetramethy)-4-piperidinyl)-, Polymer mit 2,4,6-Trichlor-1,3,5-triazin, Reaktionsprodukte mit N-Butyl-1-butanamin und N-Butyl-2,2,6,6-tetramethyl-4-piperidinamin] ist.

6. Verfahren nach einem der Ansprüche 1 bis 5, wobei das phenolische Antioxidans [Octadecyl-3-(3',5'-di-tert.-butyl-4-hydroxyphenyl)propionat] ist.

7. Verfahren nach einem der Ansprüche 1 bis 6, wobei das zumindest eine Antioxidans aus einem organischen Phosphit oder Phosphonit [Bis(2-methyl-4,6-bis(1,1-dimethylethyl)phenyl)phosphorsäureethylester] ist.

8. Verfahren nach einem der Ansprüche 1 bis 7, wobei das Metallstearat Zinkstearat ist.

9. Verfahren nach einem der Ansprüche 1 bis 8, wobei das Verdünnungsmittel ausgewählt ist aus Mineralöl, Siliconöl, Wachsen, epoxidiertem Sojabohnenöl, antistatischen Mitteln, Glycerylmonocarbonsäureester und N,N-Bis(2-hydroxyethyl)dodecanamid.

10. Verfahren nach einem der Ansprüche 1 bis 9, wobei das Gemisch 0,01 bis 0,2 Gew.-% Antioxidans aus einem organischen Phosphit oder Phosphonit, 0,01 bis 0,5 Gew.-% phenolisches Antioxidans, 0,01 bis 2 Ges.-% UV-Stabilisator, 0,01 bis 0,5 Gew.-% Metallstearat und 0,02 bis 3 Gew.-% Verdünnungsmittel umfaßt.

11. Verfahren nach einem der Ansprüche 1 bis 10, wobei alle Komponenten des Gemischs für den Kontakt mit Lebensmitteln zugelassen sind.

12. Verfahren nach einem der Ansprüche 1 bis 11, wobei die Polyolefinpolymerpartikel eine mittleren Partikelgröße von 100 bis 500 µm aufweisen.

13. Verfahren nach einem der Ansprüche 1 bis 12, wobei die Polyolefinpolymerpartikel eine Schüttdichte von 300 bis 500 kg/m³ haben.

14. Polymerpreßpulver für das Rotationsformen, das nach einem Verfahren nach einem der Ansprüche 1 bis 13 erhalten werden kann.

15. Verfahren zur Herstellung eines Polymerformgegenstandes, wobei das Verfahren umfaßt:
(i) Gewinnen einer Vielzahl von Polyolefinpolymerpartikeln mit einer mittleren Partikelgröße von 1 bis 2000 µm;
(ii) Erwärmen eines Gemischs von:
A) zumindest einem phenolischen Antioxidans;
B) zumindest einem Antioxidans aus einem organischen Phosphit oder Phosphonit ;
C) zumindest einem UV-Stabilisator, der ausgewählt ist aus[1,6-Hexandiamin, N,N'-Bis(2,2,6,6-tetramethyl-4-piperidinyl)-, Polymer mit 2,4,6-Trichlor-1,3,5-triazin, Reaktionsprodukten mit N-Butyl-1-butanamin und N-Butyl-2,2,6,6-tetramethyl-4-piperidinamin],
[Poly((6-morpholino-s-triazin-2,4-diyl)(2,2,6,6-tetramethyl-4-piperidyi)imino)hexamethylen(2,2,6,6-tetramethyl-4-piperidyl)imino))]; oder
[Poly((6-((1,1,3,3-tetramethylbutyl)amino)-1,3,5-triazin-2,4-diyl)(2,2,6,6-tetramethyl-4-piperidyl)imino)-1,6-hexandiyl((2,2,6,6-tetramethyl-4-piperidyl)imino))];
D) einem Verdünnungsmittel; und gegebenenfalls
E) einem Metallstearat;
auf eine Temperatur zwischen 20 und 200°C;
(iii) Aufbringen des Gemischs auf die Polyolefinpolymerpartikel; gegebenenfalls
(iv) Mischen eines Metallstearats mit den entstandenen Polyolefinpolymerpartikeln, falls die Komponente E in diesem Gemisch nicht vorhanden war; und
(v) Rotationsformen der Partikel.

## Revendications

1. Procédé de préparation d'une poudre polymère à mouler pour moulage par rotation, ledit procédé comprenant :
(I) d'obtenir un ensemble de particules polymères de polyoléfines ayant une dimension moyenne des particules de 1 à 2000 µm;
(II) de chauffer un mélange de :
A) au moins un antioxydant phénolique;
B) au moins un antioxydant phosphite ou phosphonite organique;
C) au moins un stabilisant anti-UV choisi parmi [1,6-hexanediamine, N,N'-bis(2,2,6,6-tétraméthyl-4-pipéridinyle), polymère avec la 2,4,6-trichloro-1,3,5-triazine, produits de réaction avec la N-butyl-1-butamine et la N-butyl-2,2,6,6-tétraméthyl-4-pipéridiamine] ; [poly((6-morpholino-s-triazine-2,4-diyl)(2,2,6,6-tétraméthyl-4-pipéridyl)Imlno)hexaméthylène (2,2,6,6-tétraméthyl-4-pipéridyl)imino))]; ou [poly((6-((1,1,3,3-tétraméthylbutyl)amino)-1,3,5-triazine.2,4.diyl).(2,2,6,6.tétraméthyl-4-pipéridyl)imino)-1,6-hexanediyl ((2,2,6,6-tétraméthyl-4-pipéridyl)imino))];
D) un diluant ; et facultativement
E) un stéarate métallique.
à une température comprise entre 20 et 200°C;
(iii) de déposer le mélange sur lesdites particules polymères de polyoléfines ; et facultativement
(iv) de mélanger un stéarate métallique avec les particules polymères de polyoléfines obtenues si le composant E n'était pas présent dans le mélange.

2. Procédé selon la revendication 1 dans lequel ledit au moins un antioxydant phénolique est choisi parmi 3-(3',5'-di-tert.butyl-4-hydroxyphényl)propionate d'octadécyle ou tétrakis (3-(3',5'(-di-tert.butyl-4-hydroxyphényl)propionate) de pentaérythrityle.

3. Procédé selon la revendication 1 ou 2, dans lequel ledit au moins un antioxydant phosphite ou phosphonlte organique est choisi parmi l'ester éthylique de l'acide [bis(2-méthyl-4,6-bis(1,1-diméthyléthyl)phényl)phosphoreux], le phosphite de tris(2,4-di-t-butylphényle), le phosphate de tris-nonylphényle, le diphosphonite de tétrakis-(2,4-di-t-butylphényl)-4,4'-biphénylène ou l'ester 2,4,6-trl-t-butylphénylique de l'acide phosphoreux-butyléthylpropandiol cyclique.

4. Procédé selon l'une quelconque des revendications 1 à 3, dans lequel les particules polymères de polyoléfines sont des particules homo- ou co-polymères du polyéthylène ou du polypropylène.

5. Procédé selon l'une quelconque des revendications 1 à 4, dans lequel ledit stabilisant anti-UV est [1,6-hexanediamine, N-N'-bis(2,2,6,6-tétraméthyl-4-pipérldinyle)-, polymère avec la 2,4,6-trichloro-1,3,5-triazine, produits de réaction avec la N-butyl-1-butanamine et la N-butyl-2,2,6,6-tétraméthyl-4-pipéridinamine].

6. Procédé selon l'une quelconque des revendications 1 à 5, dans lequel ledit antioxydant phénolique est le 3-(3',5'-di-tert.butyl-4-hydroxyphényl)propionate d'octadécyle.

7. Procédé selon l'une quelconque des revendications 1 à 6, dans lequel ledit au moins un antioxydant phosphite ou phosphonite organique est l'ester éthylique de l'acide bis (2-méthyl-4,6-bis(1,1-diméthyléthyl)phényl)phosphoreux.

8. Procédé selon l'une quelconque des revendications 1 à 7, dans lequel ledit stéarate métallique est le stéarate de zinc.

9. Procédé selon l'une quelconque des revendications 1 à 8, dans lequel ledit diluant est choisi parmi l'huile minérale, l'huile de silicone, des cires, l'huile de soja époxydée, des agents antistatiques, l'ester d'acide monocarboxylique glycérique, et le N,N-bis(2-hydroxyéthyl)dodécanamide.

10. Procédé selon l'une quelconque des revendications 1 à 9, dans lequel ledit mélange comprend de 0,01 à 0,2 % en poids d'antioxydant phosphite ou phosphonite organique, de 0,01 à 0,5 % en poids d'antioxydant phénolique, de 0,01 à 2 % en poids de stabilisant anti-UV, de 0,01 à 0,5 % en poids de stéarate métallique et de 0,02 à 3 % en poids de diluant.

11. Procédé selon l'une quelconque des revendications 1 à 10, dans lequel tous les composants dudit mélange sont de qualité alimentaire.

12. Procédé selon l'une quelconque des revendications 1 à 11, dans lequel lesdites particules polymères de polyoléfines ont une dimension moyenne des particules de 100 à 500 µm.

13. Procédé selon l'une quelconque des revendications 1 à 12, dans lequel lesdites particules polymères de polyoléfines ont une densité apparente de 300 à 500 kg/m³.

14. Poudre polymère à mouler pour moulage par rotation qui peut être obtenue par un procédé selon l'une quelconque des revendications 1 à 13.

15. Procédé de préparation d'un article polymère moulé, ledit procédé comprenant :
(i) d'obtenir un ensemble de particules de polyoléfines ayant une dimension moyenne des particules de 1 à 2000 µm;
(ii) de chauffer un mélange de :
A) au moins un antioxydant phénolique;
B) au moins un antioxydant phosphite ou phosphonite organique;
C) au moins un stabilisant anti-UV choisi parmi [1,6-hexanediamine, N,N'-bis(2,2,6,6-tétraméthyl-4-pipéridinyle), polymère avec la 2,4,6-trichloro-1,3,5-triazine, produits de réaction avec la N-butyl-1-butamine et la N-butyl-2,2,6,6-tétraméthyl-4-pipéridiamine]; [poly((6-morpholino-s-triazine.2,4.diyl)(2,2,6,6.tétraméthyl-4-pipéridyl)imino)hexaméthylène (2,2,6,6-tétraméthyl-4-pipéridyl)imino))]; ou [poly((6-((1,1,3,3-tétraméthylbutyl)amino)-1,3,5-triazine-2,4-diyl)-(2,2,6,6-tétraméthyl-4-pipéridyl)lmlno)-1,6-hexanedlyl ((2,2,6,6-tétraméthyl-4-pipéridyl)imino))];
D) un diluant; et facultativement
E) un stéarate métallique.
à une température comprise entre 20 et 200°C;
(iii) de déposer le mélange sur lesdites particules de polyoléfines; et facultativement
(iv) de mélanger un stéarate métallique avec les particules de polyoléfines obtenues si le composant E n'était pas présent dans le mélange ; et
(v) de mouler par rotation lesdites particules.
